# EUROPÄISCHE PATENTANMELDUNG

(11) **EP 4 116 164 A1**
(43) Veröffentlichungstag der Anmeldung: **11.01.2023**
(21) Anmeldenummer: 21184525.0
(22) Anmeldetag: 08.07.2021
(51) Int. Cl.: B60W 50/035, B60W 50/029, B62D 5/04, B62D 9/00

(54) **FAHRZEUG, INSBESONDERE KRAFTFAHRZEUG, SOWIE VERFAHREN ZUR STEUERUNG EINES FAHRZEUGS**

(71) Anmelder: thyssenkrupp Presta Aktiengesellschaft, 9492 Eschen (LI); thyssenkrupp AG, 45143 Essen (DE)
(72) Erfinder: Lapis, Leonard, 9466 Sennwald (CH); Csikja, Rudolf, 1126 Budapest (HU); Malsam, Robin, 6800 Feldkirch (AT)
(74) Vertreter: thyssenkrupp Intellectual Property GmbH

(57) **Zusammenfassung**

Die Erfindung betrifft ein Fahrzeug (F), insbesondere Kraftfahrzeug, umfassend Aktuatoren, insbesondere mindestens eine Antriebseinrichtung (3) mit einem Antriebsmotor (31), der auf mindestens ein Antriebsrad (1a-d) wirken kann, eine Bremseinrichtung mit mindestens einer Bremse (2a-d), die auf mindestens ein Antriebsrad (1a-d) wirken kann, und/oder eine Lenkeinrichtung (4) mit mindestens einem Lenksensor (42), mit welcher der Radwinkel (a) mindestens eines Rades (1a-d) verstellt werden kann, eine Fahrzeugbewegungssteuerung (5), sowie mindestens ein Sollwerteingabemittel (8) zur Eingabe von Sollwertvorgaben (S 41, S61, S71, SAD), wobei das Fahrzeug mit einem Sollwertverarbeitungsmittel (8) ausgestattet ist, wobei das Sollwertverarbeitungsmittel (8) dazu eingerichtet ist, Sollwertvorgaben (S 41, S61, S71, SAD) der Sollwerteingabemittel (41, 61, 71, AD) zu erfassen, aus den Sollwertvorgaben einen Gierbeschleunigungssollwert (GS) und Translationsbeschleunigungssollwerte, insbesondere einen Längsbeschleunigungssollwert (LS) und einen Querbeschleunigungssollwert (QS), zu berechnen, das Sollwertverarbeitungsmittel (8) dazu eingerichtet ist, die berechneten Gierbeschleunigungssollwert (GS) und Translationsbeschleunigungssollwerte, insbesondere einen Längsbeschleunigungssollwert (LS) und einen Querbeschleunigungssollwert (QS), an die Fahrzeugbewegungssteuerung (5) zu übermitteln, wobei die Fahrzeugbewegungssteuerung (5) dazu eingerichtet ist eine Auswahl oder alle zur Verfügung stehenden Aktuatoren derart anzusteuern, dass der Gierbeschleunigungssollwert (GS) und die Translationsbeschleunigungssollwerte, insbesondere der Längsbeschleunigungssollwert (LS) und der Querbeschleunigungssollwert (QS), erreicht werden oder zumindest näherungsweise erreicht werden, sowie ein Verfahren zur Steuerung des Fahrzeuges.

## Beschreibung

Die vorliegende Erfindung betrifft ein Fahrzeug, insbesondere Kraftfahrzeug, gemäß dem Oberbegriff des Anspruchs 1, sowie ein Verfahren zur Steuerung des erfindungsgemäßen Fahrzeuges gemäß Anspruch 11.

Ein Fahrzeug umfasst eine Anzahl von Aktuatoren, wie beispielsweise Lenkaktuatoren, Antriebsaktuatoren, Bremsaktuatoren, etc. Ferner umfasst ein Fahrzeug eine Anzahl von Sollwerteingabemitteln, wie beispielsweise ein Lenkeingabemittel, ein Bremspedal, ein Fahrpedal, etc. Bei modernen Fahrzeugen kommen beispielsweise sogenannte Steer-by-Wire Lenksysteme zum Einsatz, bei denen die Stellung der gelenkten Räder nur noch indirekt mit dem Lenkeingabemittel gekoppelt ist. Die eigentliche Lenkbewegung wird mit Lenkaktuatoren ausgeführt, die meist elektrisch angesteuert werden. Vergleichbare Systeme existieren auch für Bremsen und Antriebssteuerung. Im Wesentlichen laufen die hierzu notwendigen Steuer- und Regelprozesse in einer entsprechend angepassten elektronischen Fahrzeugbewegungssteuerung ab.

Aus der zum Zeitpunkt der Einreichung unveröffentlichten Patentanmeldung DE10 2020 100 449 ist eine Erfindung betreffend ein Kraftfahrzeuglenksystem, ein Kraftfahrzeug und ein Verfahren zur Steuerung eines Kraftfahrzeuglenksystems beschrieben. Die Erfindung befasst sich mit der Möglichkeit der Redundanz. Wenn ein Aktuator ausfällt, kann ein anderer (Satz von) Aktuatoren die Aufgabe des ausfallenden Aktuators übernehmen.

Aus der zum Zeitpunkt der Einreichung unveröffentlichten Patentanmeldung DE 10 2021 202 301 ist ein System, umfassend eine Referenz-Bewegungsbahn-Einrichtung, eine Kostenfunktionseinrichtung, eine dynamisches-Modell-Einrichtung, eine Summiereinrichtung, einen Controller, eine Bremsenaktuatoreinrichtung, eine Antriebsaktuatoreinrichtung, eine Lenkungsaktuatoreinrichtung, einen Multiplexer und ein Fahrzeug, insbesondere Kraftfahrzeug, bekannt geworden. Bei der vorgenannten Erfindung geht es um die Verfolgung der Fahrzeugtrajektorie, wobei das Verhalten durch eine Kostenfunktion gegeben ist.

Wenngleich hier bereits vorteilhafte Kraftfahrzeuglenksystem bzw. Kraftfahrzeuge beschrieben worden sind, so besteht dennoch Verbesserungsbedarf.

Hier setzt die vorliegende Erfindung an und macht es sich zur Aufgabe, ein verbessertes Fahrzeug vorzuschlagen, insbesondere sollen die verschiedenen Aktuatoren durch unterschiedliche Sollwertsignale, insbesondere mit unterschiedlicher physikalischer Bedeutung, angesteuert werden und es soll eine kombinierte Wirkung effizient realisiert werden.

Erfindungsgemäß wird dies durch ein Fahrzeug gemäß Anspruch 1 gelöst.

Dadurch, dass das Fahrzeug mit einem Sollwertverarbeitungsmittel ausgestattet ist, wobei das Sollwertverarbeitungsmittel dazu eingerichtet ist, Sollwertvorgaben der Sollwerteingabemittel zu erfassen, aus den Sollwertvorgaben einen Gierbeschleunigungssollwert und Translationsbeschleunigungssollwerte, insbesondere einen Längsbeschleunigungssollwert und einen Querbeschleunigungssollwert, zu berechnen, das Sollwertverarbeitungsmittel ferner dazu eingerichtet ist, die berechneten Gierbeschleunigungssollwert und Translationsbeschleunigungssollwerte, insbesondere einen Längsbeschleunigungssollwert und einen Querbeschleunigungssollwert, an die Fahrzeugbewegungssteuerung zu übermitteln, wobei die Fahrzeugbewegungssteuerung dazu eingerichtet ist, eine Auswahl oder alle zur Verfügung stehenden Aktuatoren derart anzusteuern, dass der Gierbeschleunigungssollwert und die Translationsbeschleunigungssollwerte, insbesondere der Längsbeschleunigungssollwert und der Querbeschleunigungssollwert, erreicht werden oder zumindest näherungsweise erreicht werden, kann ein verbessertes Fahrzeug zur Verfügung gestellt werden.

Ein zentrales elektronisches Steuergerät, das für die Fahrzeugbewegungssteuerung verantwortlich ist, steuert die an Bord integrierten Aktuatoren an, die die Fahrzeugbewegung beeinflussen. Eine dynamisch skalierbare und anpassbare Anforderung für jeden Aktuator ist vorteilhaft, um die kombinierte Wirkung der Aktuatoren in Bezug auf die Fahrzeugsteuerbarkeit und die Redundanz der Aktuatoren zu nutzen.

Diese Lösung ist besonders vorteilhaft für die Redundanz der Aktuatoren. Fällt z. B. der Zahnstangenaktuator aus oder ist die Leistung eingeschränkt, kann der Antriebs-/Bremsaktuator dessen Funktionalität unterstützen/übernehmen, da diese Aktuatoren auch Einfluss auf das Giermoment des Fahrzeugs haben. Die Fahrzeugbewegung ist mehr mit der Eingabe eines autonomen Fahrsystems oder des menschlichen Fahrers gekoppelt als mit dem Aktuatorzustand, insbesondere Zahnstangenposition.

Auch ist das hier beschriebene erfindungsgemäße System insbesondere vorteilhaft gegenüber der in der DE 10 2021 202 301 beschriebenen Lösung, als dass die Fahrzeugbewegung als Giermoment beschrieben wird und sich dieses direkt aus Aktuatormomenten/-kräften zusammensetzen soll. Da die Aktuatoren vorzugsweise als elektrisch angenommen werden, ist der ansteuernde Strom gegeben und das Drehmoment, das sich aus dem Strom ergibt, kann trivial ermittelt werden.

Auch ist das hier beschriebene erfindungsgemäße System insbesondere vorteilhaft gegenüber der in der DE10 2020 100 449 beschriebenen Lösung, als dass bei gleichzeitigem Einsatz mehrerer Aktuatoren die Leistung angepasst werden kann und dass das gewünschte Fahrzeugverhalten auf mehrere Aktuatoreinflüsse verteilt werden kann. Insbesondere die kombinierte Beeinflussung von alternativer Lenkfunktion und Lenkfunktion wird dort nicht beschrieben.

Zudem wird in der DE10 2020 100 449 ein Prinzip beschrieben, andere Aktuatoren anzusteuern, um den ausgefallenen Aktuator zu ersetzen, damit das Fahrzeug fahrbar bleibt. Es gibt verschiedene Möglichkeiten, dies zu realisieren. In der in der vorliegenden Anmeldung beschriebenen Erfindung wird eine mögliche technische Lösung von der Ansteuerung her beschrieben. Sie ist im Wesentlichen drehmoment- und kraftbasiert, nicht wie herkömmliche Konzepte, die positionsbasiert sind. Der Giermomentsollwert des Fahrzeugs wird in den Sollwert der Zahnstangenkraft und der Radmomente zerlegt. In diesem Fall ist es beispielsweise nicht wichtig, wie die gelenkten Räder ausgerichtet sind, sondern dass der Kraft-/Drehmomentfluss von den Aktuatoren das geforderte Fahrzeuggiermoment erreichen kann.

Weitere vorteilhafte Ausgestaltungen der vorgeschlagenen Erfindung ergeben sich insbesondere aus den Merkmalen der Unteransprüche. Die Gegenstände bzw. Merkmale der verschiedenen Ansprüche können grundsätzlich beliebig miteinander kombiniert werden.

In einer vorteilhaften Ausgestaltung der Erfindung kann vorgesehen sein, dass das Fahrzeug mit einem Gierbeschleunigungssensor zur Erfassung der tatsächlichen Gierbeschleunigung, einem Längsbeschleunigungssensor zur Erfassung der tatsächlichen Längsbeschleunigung, und/oder Querbeschleunigungssensor zur Erfassung der tatsächlichen Querbeschleunigung ausgestattet ist, die in einer zur Signalübertragung geeigneten Verbindung mit der Fahrzeugbewegungssteuerung stehen. Hierdurch kann vorteilhaft eine Rückkopplungsinformation generiert werden, um eine Referenznachführung zu realisieren.

In einer weiteren vorteilhaften Ausgestaltung der Erfindung kann vorgesehen sein, dass es sich bei dem Sollwerteingabemittel um einen Lenkwinkelsensor, einen Bremspedalsensor, einen Fahrpedalsensor, autonome Fahrsysteme und/oder ein Augenbewegungserfassungssystem handelt. Vorgenannte Komponenten sind meist Teil größerer Einheiten, wie beispielsweise Lenkeinrichtungen, Bremseinrichtungen, Fahrpedaleinrichtungen. Da sie meist nach dem by-wire Prinzip ausgestaltet sind, eignen sie sich vorteilhaft in Verbindung mit einer elektronischen Fahrzeugbewegungssteuerung bzw. einem elektronischen Sollwertverarbeitungsmittel.

In einer weiteren vorteilhaften Ausgestaltung der Erfindung kann vorgesehen sein, dass die Fahrzeugbewegungssteuerung dazu eingerichtet ist, die jeweiligen Aktuatoren mittels Lenkantriebssollwert, Antriebsmotorsollwert und/oder Bremsensollwert anzusteuern. Allgemein sind Radaktuatoren und/oder Einzelradaktuatoren vorgesehen, die auch als Road Wheel Actuator oder RWA bezeichnet werden. Diese Aktuatoren umfassen einzelne oder mehrere der oben genannten Aktuatoren in Kombination je nach Ausführungsform. Im weiteren werden diese allgemein als RWA bezeichnet.

In einer weiteren vorteilhaften Ausgestaltung der Erfindung kann vorgesehen sein, dass
- das Fahrzeug eine vordere und/oder hintere RWA, sowie eine Fahrwerkskinematik umfasst, wobei
- die Fahrwerkskinematik eine vordere und/oder hintere Lenkungszahnstange, sowie ein Bremse/Antriebssystem umfasst, wobei
- die Fahrzeugbewegungssteuerung dazu eingerichtet ist, einen Zahnstangenkraftsollwert an den vorderen und/oder hinteren RWA zu übermitteln,
- der vordere und/oder hintere RWA dazu eingerichtet ist, einen Motordrehmomentsollwert an die Fahrwerkskinematik zu übermitteln,
- die Fahrzeugbewegungssteuerung dazu eingerichtet ist, einen Raddrehmomentsollwert an das Bremse/Antriebssystem zu übermitteln.

In einer weiteren vorteilhaften Ausgestaltung der Erfindung kann vorgesehen sein, dass das Fahrzeug, insbesondere die Fahrzeugbewegungssteuerung derart eingerichtet ist, dass
- sich eine Gierbeschleunigung des Fahrzeugs aus einem Zahnstangeneinfluss, insbesondere Zahnstange einer vorderen und/oder hinteren Lenkungseinrichtung, und einem Achsgiermomenteinfluss, insbesondere einer vorderen und/oder hinteren Antriebseinrichtung, zusammensetzen kann, wobei insbesondere
- jede Zahnstange, insbesondere Lenkungszahnstange, direkt durch einen Drehmoment-Sollwert einer Antriebseinrichtung, gesteuert werden kann, insbesondere durch eine direkt angeforderte Zahnstangenkraft, wobei insbesondere
- jede Zahnstange indirekt durch einen Drehmoment-Sollwert einer Bremse und eine Antriebseinrichtung, insbesondere abhängig vom Torque-Steer-Effekt der Aufhängung, gesteuert werden kann, wobei insbesondere
- das Giermoment jeder Achse, insbesondere vordere und/oder hintere Achse, direkt durch einen Drehmoment-Sollwert einer Bremse und einer Antriebseinrichtung gesteuert werden kann.

In einer weiteren vorteilhaften Ausgestaltung der Erfindung kann vorgesehen sein, dass die Fahrzeugbewegungssteuerung, dazu eingerichtet ist, bei einem gegebenem Gierbeschleunigungssollwert, aus Fahrzeugträgheitsparametern einen Giermomentsollwert zu berechnen.

In einer weiteren vorteilhaften Ausgestaltung der Erfindung kann vorgesehen sein, dass die Fahrzeugbewegungssteuerung, dazu eingerichtet ist, dass in Kenntnis der verfügbaren Aktuatoren, ihrer Leistung, ihrer Auswirkung auf die Zahnstangenkraft und das Giermoment, für die jeweiligen Umgebungs- und Fahrzeugbedingungen, insbesondere Reibung der Straßenreifen, Radius der Aufhängung, etc., eine Übertragungsfunktion für jede Drehmomentanforderung der Aktuatoren implementiert werden kann.

In einer weiteren vorteilhaften Ausgestaltung der Erfindung kann vorgesehen sein, dass die Fahrzeugbewegungssteuerung in Verbindung mit dem Sollwertverarbeitungsmittel als Multiple-Input-Multiple-Output-Controller ausgestaltet ist, der dazu eingerichtet ist, eine Übertragungsfunktion als Feedforward-Verstärkung zu verwenden, um die Aktuatoren zu steuern.

In einer weiteren vorteilhaften Ausgestaltung der Erfindung kann vorgesehen sein, dass die Fahrzeugbewegungssteuerung zur Messung der Fahrzeugbewegung und der Aktuatorsättigung eingerichtet ist, wobei die Fahrzeugbewegungssteuerung dazu eingerichtet ist, eine Rückkopplungsinformation zu geben, um eine Referenznachführung zu realisieren.

Eine weitere Aufgabe der vorliegenden Erfindung liegt darin, ein vorteilhaftes Verfahren zur Bewegung eines erfindungsgemäßen Fahrzeugs vorzuschlagen.

Erfindungsgemäß wird diese Aufgabe durch ein Verfahren mit den Merkmalen des Anspruchs 11 gelöst. Zur vorteilhaften Bewegung des Fahrzeugs sind folgende Verfahrensschritte vorgesehen.
- Erfassen von Sollwertvorgaben der Sollwerteingabemittel von dem Sollwertverarbeitungsmittel, insbesondere der Lenkwinkel α des Lenkrades, der Betätigungswinkel des Bremspedals und/oder der Betätigungswinkel des Fahrpedals;
- Berechnen eines Gierbeschleunigungssollwertes und Translationsbeschleunigungssollwerte, insbesondere eines Längsbeschleunigungssollwertes und einen Querbeschleunigungssollwertes durch das Sollwertverarbeitungsmittel;
- Übermittlung der berechneten Werte von dem Sollwertverarbeitungsmittel an die Fahrzeugbewegungssteuerung;
- Ansteuerung einer Auswahl oder alle zur Verfügung stehenden Aktuatoren durch die Fahrzeugbewegungssteuerung derart, dass der Gierbeschleunigungssollwert und die Translationsbeschleunigungssollwerte, insbesondere der Längsbeschleunigungssollwert und der Querbeschleunigungssollwert, erreicht werden oder zumindest näherungsweise erreicht werden.

Hinsichtlich der sich hieraus ergebenden Vorteile kann auf die bereits zu dem erfindungsgemäßen Fahrzeug genannten Vorteile verwiesen werden.

Weitere vorteilhafte Ausgestaltungen der vorgeschlagenen Erfindung ergeben sich insbesondere aus den Merkmalen der Unteransprüche. Die Gegenstände bzw. Merkmale der verschiedenen Ansprüche können grundsätzlich beliebig miteinander kombiniert werden.

In einer vorteilhaften Ausgestaltung der Erfindung kann vorgesehen sein, dass der Gierbeschleunigungssensor eine tatsächliche Gierbeschleunigung, der Längsbeschleunigungssensor eine tatsächliche Längsbeschleunigung, und/oder der Querbeschleunigungssensor eine tatsächliche Querbeschleunigung an die Fahrzeugbewegungssteuerung rückmeldet. Hierdurch kann vorteilhaft eine Rückkopplungsinformation generiert werden, um eine Referenznachführung zu realisieren.

In einer vorteilhaften Ausgestaltung der Erfindung kann vorgesehen sein, dass
- die Fahrzeugbewegungssteuerung eine Zahnstangenkraftsollwert an den vordere/hintere RWA übermittelt,
- die vordere/hintere RWA ein Motordrehmomentsollwert an die Fahrwerkskinematik übermittelt,
- die Fahrzeugbewegungssteuerung eine Raddrehmomentsollwert an das Bremse/Antriebssystem übermittelt.

In einer vorteilhaften Ausgestaltung der Erfindung kann vorgesehen sein, dass
- Sollwerteingaben vom Fahrer oder von einem automatisierten Fahralgorithmus in Gierbeschleunigungswerte, insbesondere über die vertikale Achse, und Translationsbeschleunigungswerte, insbesondere longitudinal und lateral, übersetzt werden, und/oder
- eine tatsächliche Gierbeschleunigung aus einem Zahnstangeneinfluss, insbesondere Zahnstange einer vorderen und/oder hinteren Lenkungseinrichtung, und einem Achsgiermomenteinfluss insbesondere einer vorderen und/oder hinteren Antriebseinrichtung, zusammengesetzt wird, wobei
- jede Zahnstange, insbesondere Lenkungszahnstange, direkt durch einen Drehmoment-Sollwert der Antriebseinrichtung gesteuert wird, insbesondere durch eine direkt angeforderte Zahnstangenkraft, wobei
- jede Zahnstange indirekt durch einen Drehmoment-Sollwert einer Bremse und einer Antriebseinrichtung, insbesondere abhängig vom Torque-Steer-Effekt der Aufhängung, gesteuert wird, wobei
- das Giermoment jeder Achse, insbesondere vordere und/oder hintere Achse, direkt durch den Drehmoment-Sollwert der Bremse und der Antriebseinrichtung gesteuert wird.

In einer vorteilhaften Ausgestaltung der Erfindung kann vorgesehen sein, dass bei einem gegebenem Gierbeschleunigungssollwert, aus den Fahrzeugträgheitsparametern ein Giermomentsollwert berechnet wird und/oder dass in Kenntnis der verfügbaren Aktuatoren, ihrer Leistung und ihrer Auswirkung auf die Zahnstangenkraft und das Giermoment, für die jeweiligen Umgebungs- und Fahrzeugbedingungen, insbesondere Reibung der Straßenreifen, Radius der Aufhängung, eine Übertragungsfunktion für jede Drehmomentanforderung der Aktuatoren implementiert wird und/oder dass die Fahrzeugbewegungssteuerung als Multiple-Input-Multiple-Output-Controller ausgestaltet ist, wobei eine Übertragungsfunktion als Feedforward-Verstärkung zu verwendet wird, um die Aktuatoren zu steuern und/oder dass die Fahrzeugbewegungssteuerung die Fahrzeugbewegung und die Aktuatorsättigung misst, wobei die Fahrzeugbewegungssteuerung eine Rückkopplungsinformation gibt, um eine Referenznachführung zu realisieren.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: ein erfindungsgemäßes Fahrzeug in einer schematischen seitlichen Ansicht;
- Fig. 2: eine beispielhaft dargestellte Lenkeinrichtung nach dem steer-by-wire Prinzip;
- Fig. 3: ein erfindungsgemäßes Fahrzeug in einer schematischen Ansicht von oben;
- Fig. 4: eine schematische Darstellung des erfindungsgemäßen Fahrzeugs bzw. Verfahrens;
- Fig. 5: eine weitere schematische Darstellung des erfindungsgemäßen Fahrzeugs bzw. Verfahrens in einer Ausführungsform;
- Fig. 6: ein erfindungsgemäßes Fahrzeug mit einem Bussystem;
- Fig. 7: ein erfindungsgemäßes Fahrzeug in einer schematischen Ansicht von oben.

Folgende Bezugszeichen werden in den Abbildungen verwendet:
- α: Lenkwinkel
- β: Radwinkel / Fahrzeugwinkel

- G: Giermoment
- FZ: Einfluss der Zahnstangenkraft
- VG: Einfluss von Vorderachsengiermoment
- HG: Einfluss von Hinterachsengiermoment

- B: Bussystem
- FK: Fahrwerkskinenatik
- VG: Einfluss von Vorderachsengiermoment
- HG: Einfluss von Hinterachsengiermoment
- RWA: Vorderer/hinterer RWA (Road Wheel Actuator)
- VHL: Vordere/hintere Lenkungszahnstange
- BAS: Bremse/Antriebssystem

- H: Hochachse
- L: Längsachse
- Q: Querachse
- F: Fahrzeug, insbesondere Kraftfahrzeug
- GS: Gierbeschleunigungssollwert
- LS: Längsbeschleunigungssollwert
- QS: Querbeschleunigungssollwert
- GT: tatsächliche Gierbeschleunigung (Gierbeschleunigungsistwert)
- LT: tatsächliche Längsbeschleunigung (Längsbeschleunigungsistwert)
- QT: tatsächliche Querbeschleunigung (Querbeschleunigungsistwert)

- S41: Sollwertvorgabe des Lenkwinkelsensors
- S61: Sollwertvorgabe des Bremspedalssensors
- S71: Sollwertvorgabe des Fahrpedalsensors
- SAD: Sollwertvorgabe der autonomen Steuerung

- S42: Lenkantriebssollwert
- S31: Antriebsmotorsollwert
- S2: Bremsensollwert

- ZFS: Zahnstangenkraftsollwert
- WTS: Raddrehmomentsollwert
- MTS: Motordrehmomentsollwert

- 1a-d: Rad
- 2a-d: Bremse
- 3: Antriebseinrichtung
- 4: Lenkeinrichtung
- 5: Fahrzeugbewegungssteuerung
- 6: Bremspedal
- 7: Fahrpedal
- 8: Sollwertverarbeitungsmittel

- 31: Antriebsmotor
- 32: Antriebsachse

- 41: Lenkwinkelsensor
- 42: Lenkantrieb
- 43: Lenkungszahnstange
- 44: Lenkrad
- 45: Lenksteuereinrichtung
- 51: Gierbeschleunigungssensor
- 52: Längsbeschleunigungssensor
- 53: Querbeschleunigungssensor

- 61: Bremspedalsensor

- 71: Fahrpedalsensor

Dabei gelten Merkmale und Details, die im Zusammenhang mit einem Verfahren beschrieben sind selbstverständlich auch im Zusammenhang mit der erfindungsgemäßen Vorrichtung und umgekehrt, sodass bezüglich der Offenbarung zu den einzelnen Erfindungsaspekten stets wechselseitig Bezug genommen wird bzw. werden kann. Außerdem kann ein ggf. beschriebenes erfindungsgemäßes Verfahren mit der erfindungsgemäßen Vorrichtung durchgeführt werden.

Die hierin verwendete Terminologie dient nur zum Zweck des Beschreibens bestimmter Ausführungsformen und soll die Offenbarung nicht beschränken. Wie hierin verwendet, sollen die Singularformen "ein/eine" und "der/die/das" auch die Pluralformen enthalten, sofern der Kontext dies nicht anderweitig klar erkennen lässt. Es wird zudem klar sein, dass die Ausdrücke "weist auf" und/oder "aufweisend", wenn in dieser Beschreibung verwendet, das Vorhandensein der genannten Merkmale, ganzen Zahlen, Schritte, Operationen, Elemente und/oder Bauteile spezifizieren, aber nicht das Vorhandensein oder den Zusatz von einem/einer oder mehreren anderen Merkmalen, ganzen Zahlen, Schritten, Operationen, Elementen, Bauteilen und/oder Gruppen derselben ausschließen. Wie hierin verwendet, enthält der Ausdruck "und/oder" jedes beliebige und alle Kombinationen von einem oder mehreren der assoziierten, aufgelisteten Elemente.

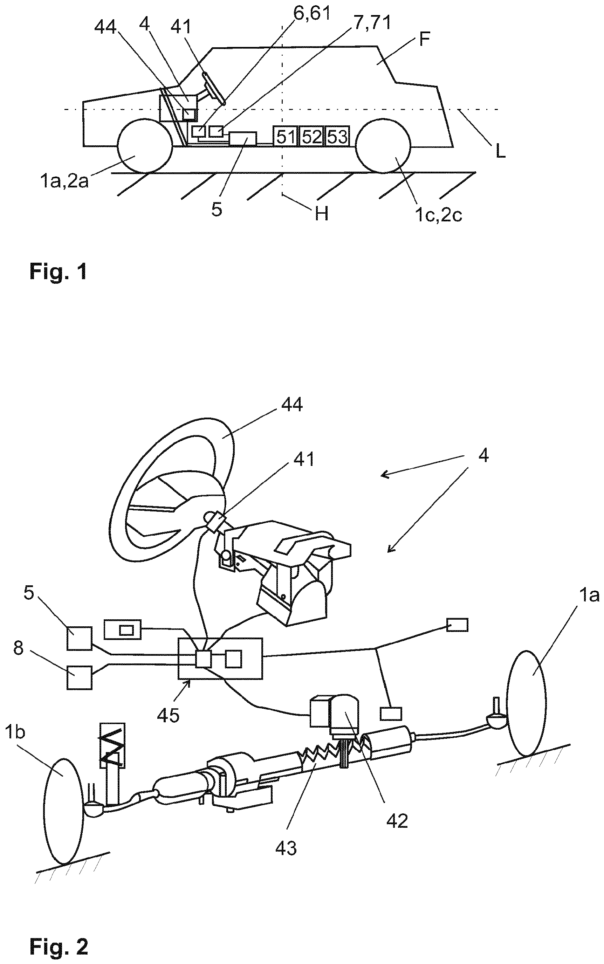

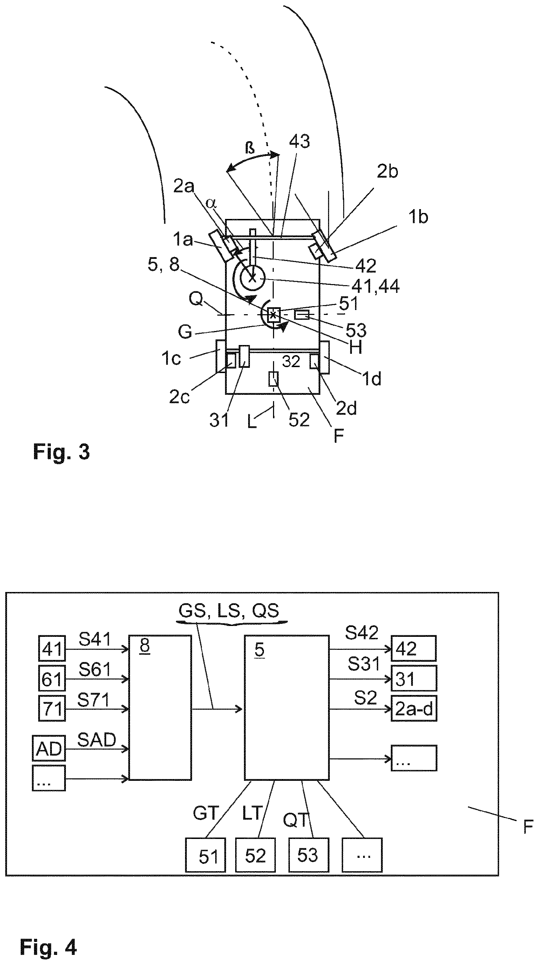

Zunächst wird auf Fig. 1 und 3 Bezug genommen.

Ein Fahrzeug F, insbesondere Kraftfahrzeug, umfasst im Wesentlichen zwei Vorderräder 1a, 1b, sowie zwei Hinterräder 1c, 1d. Die Vorderräder, als auch die Hinterräder, können mit Bremsen 2a-2d ausgestattet sein. Das Fahrzeug weist ferner ein Bremspedal 6 mit zugeordnetem Bremspedalssensor 61, sowie ein Fahrpedal 7, mit zugeordnetem Fahrpedalsensor 71, auf. Zur geometrischen Orientierung ist hier eine Längsachse L und eine Hochachse H eingezeichnet. Ferner ist schematisch eine Lenkeinrichtung 4 dargestellt, die beispielsweise als Steer-by-Wire Lenksystem ausgestaltet sein soll.

In der Fig. 2 ist eine Lenkeinrichtung 4, insbesondere Steer-by-Wire Lenksystem, schematisch dargestellt. Es ist insbesondere ein Lenkwinkelsensor 41, Lenkantrieb 42, Zahnstange 43, Lenkrad 44 und Lenkungssteuerung 45 dargestellt. Der Fahrer (nicht dargestellt) betätigt das Lenkrad 44. Der Lenkwinkelsensor 41 detektiert den Winkel des Lenkrades und übermittelt den detektierten Lenkwinkel elektrisch an ein geeignetes Lenkungssteuergerät 45. Das Lenkungssteuerungsgerät 45 wiederum steuert den Lenkantrieb 42, der auf eine Zahnstange 43 wirkt. Die Zahnstange 43 ist wiederum mit den beiden hier dargestellten Rädern 1a, 1b, bei denen es sich in dem hier dargestellten Beispiel um Vorderräder eines Fahrzeuges F handeln kann, verbunden und dreht sie gemäß dem Freiheitsgrad ihrer Radaufhängung in die durch das Lenkrad 44 angeforderte Winkelposition. Die grundsätzliche Funktion bzw. weitere Details eines derartigen Steer-by-Wire Lenksystems sind dem Fachmann hinreichend bekannt.

In der Fig. 3 ist ein Fahrzeug F, insbesondere Kraftfahrzeug, in einer schematischen Ansicht von oben dargestellt. Es ist erkennbar, dass das Fahrzeug F mit einer Antriebseinrichtung 3, insbesondere Antriebsmotor 31 und einer Antriebsachse 32 für die Hinterräder 1c, 1d ausgestattet ist. Denkbar ist natürlich auch eine Antriebseinrichtung für die Vorderräder, oder auch jeweils separate Antriebseinrichtungen für jedes einzelne Rad.

Es ist zudem vorgesehen, dass alle Räder 1a-1d jeweils mit einer Bremse 2a - 2d ausgestattet sind. Zudem sind zur geometrischen Orientierung eine Längsachse L, Querachse Q und Hochachse bzw. vertikale Achse H dargestellt. Zudem soll durch den Pfeil G das Giermoment des Fahrzeugs F angedeutet werden. Die Längsachse kann entsprechend auch als longitudinale und die Querachse entsprechend als laterale Achse angesprochen werden.

Es ist erkennbar, dass die vorderen Räder 1a, 1b Teil einer Vorderachse und die hinteren Räder 1c, 1d entsprechend Teil einer Hinterachse sind. Weitere Komponenten einer Vorder- bzw. Hinterachse ergeben sich entsprechend der Bauform der jeweiligen Achse bzw. Fahrzeug.

Es ist zudem die oben bereits skizzierte Lenkeinrichtung 4, insbesondere Steer-by-Wire Lenksystem, für die Vorderräder 1a, 1b vorgesehen, so dass auch hier zumindest Lenkrad 44, Lenkantrieb 42 und Zahnstange 43 abgebildet sind. Zudem sollen auch die Vorderräder 1a, 1b und die Hinterräder 1c, 1d mit je einer Bremse 2a - 2d ausgestattet sein.

Das Fahrzeug F befindet sich im Fahrbetrieb, wobei sich das Fahrzeug vor einer Kurvenfahrt befindet. Zu diesem Zeitpunkt trägt der Fahrer über das Lenkrad 44 einen Lenkwinkel α ein, der durch die Lenkeinrichtung 4 erfasst wird. Die Lenksteuereinheit 45 steuert anschließend den Lenkantrieb 42 an, der über die Zahnstange 43 die Lenkanforderung an die beiden Vorderräder 1a, 1b überträgt. Daraus resultiert ein gewünschter Radwinkel bzw. Fahrzeugwinkel β, der dem durch den Fahrer erwarteten Winkel des Fahrzeuges entspricht.

In der Fig. 4 ist ein erfindungsgemäßes Fahrzeug bzw. das erfindungsgemäße Verfahren schematisch dargestellt.

Es ist vorgesehen, dass das Fahrzeug F Aktuatoren A aufweist. Als Aktuator werden grundsätzlich antriebstechnische Baueinheiten bezeichnet, die ein elektrisches Signal (vom Steuerungscomputer ausgegebene Befehle) in mechanische Bewegungen bzw. Veränderungen physikalischer umsetzen und damit aktiv in den gesteuerten Prozess eingreifen.

Bei einem Aktuator kann es sich beispielsweise um einen Antriebsmotor 31 handeln, der auf mindestens ein Rad 1a-d wirken kann, eine oder mehrere Bremsen 2a-d, die auf mindestens ein Rad 1a-d wirken können, und/oder ein Lenkantrieb 42, mit welcher der Radwinkel α mindestens eines Rades 1a-d verstellt werden kann, handeln. Weitere Aktuatoren sind denkbar. Es ist vorzugsweise vorgesehen, dass mehrere Aktuatoren, mindestens aber zwei Aktuatoren in dem Fahrzeug vorgesehen sind. Insofern kann das Fahrzeug und dessen Steuerung auch als Multi-Aktuator Fahrzeug angesprochen werden.

Ferner sind Sollwerteingabemittel zur Steuerung des Fahrzeuges vorgesehen. Hier kann es sich beispielsweise um den Lenkwinkelsensor 42, den Bremspedalsensor 61 und/oder den Fahrpedalsensor 71 handeln. Das bzw. die Sollwerteingabemittel bilden grundsätzlich die Schnittstelle zwischen Fahrer und Fahrzeug. Weitere Sollwerteingabemittel sind denkbar, beispielsweise auch autonome Fahrsysteme oder auch Augenbewegungserfassungssystem, etc. Dies soll insbesondere durch das Kästchen mit den ... angedeutet werden.

Ferner ist ein erfindungsgemäßes Fahrzeug mit einem Sollwertverarbeitungsmittel 8, sowie einer Fahrzeugbewegungssteuerung 5 ausgestattet. Bei der Verarbeitungseinrichtung 5 bzw. dem Sollwertverarbeitungsmittel 8 kann es sich insbesondere um einen Rechner mit Datenspeicher und Prozessor handeln, der mit diversen Schnittstellen ausgestattet ist. Eine derartige Verarbeitungseinrichtung 5 kann auch als elektronische Steuer-Regel-Einheit angesprochen werden.

Das Sollwertverarbeitungsmittel 8 ist dazu eingerichtet Sollwertvorgaben S41, S61, S71, SAD der Sollwerteingabemittel 41, 61, 71, AD zu erfassen, sowie aus den Sollwertvorgaben einen Gierbeschleunigungssollwert GS und Translationsbeschleunigungssollwerte, insbesondere einen Längsbeschleunigungssollwert LS und einen Querbeschleunigungssollwert QS, zu berechnen, sowie die berechneten Gierbeschleunigungssollwerte GS und Translationsbeschleunigungssollwerte, insbesondere einen Längsbeschleunigungssollwert LS und einen Querbeschleunigungssollwert QS, an die Fahrzeugbewegungssteuerung 5 zu übermitteln.

Die Fahrzeugbewegungssteuerung 5 ist dazu eingerichtet, eine Auswahl oder alle zur Verfügung stehenden Aktuatoren derart anzusteuern, dass der Gierbeschleunigungssollwert GS und die Translationsbeschleunigungssollwerte, insbesondere der Längsbeschleunigungssollwert LS und der Querbeschleunigungssollwert QS, erreicht werden oder zumindest näherungsweise erreicht werden.

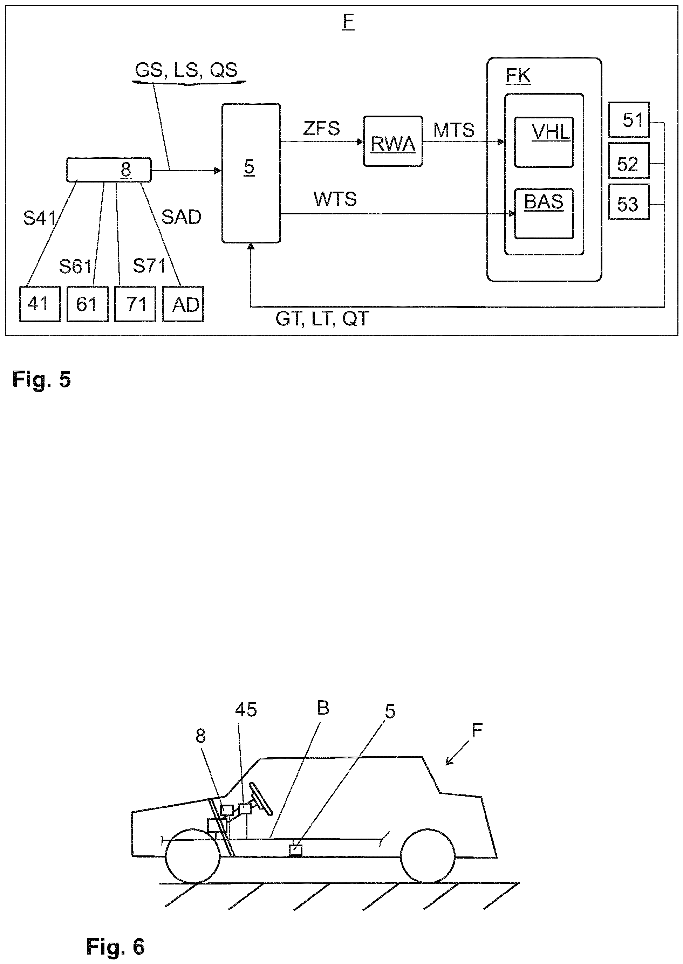

Denkbar ist eine aktuatorspezifische Ansteuerung mittels Lenkantriebssollwert S42, Antriebsmotorsollwert S31 und/oder Bremsensollwert S2. Die Ansteuerung kann beispielsweise auch durch einen Zahnstangenkraftsollwert ZFS, einen Raddrehmomentsollwert WTS und/oder einen Motordrehmomentsollwert MTS erfolgen, wie in einem nachfolgenden Beispiel gemäß Fig. 5 dargestellt.

Es kann ferner vorzugsweise vorgesehen sein, dass das Kraftfahrzeug mit einem Gierbeschleunigungssensor 51 zur Erfassung der tatsächlichen Gierbeschleunigung GT, einem Längsbeschleunigungssensor 52 zur Erfassung der tatsächlichen Längsbeschleunigung LT, und/oder Querbeschleunigungssensor 53 zur Erfassung der tatsächlichen Querbeschleunigung QT ausgestattet ist, die in einer zur Signalübertragung geeigneten Verbindung mit der Fahrzeugbewegungssteuerung 5 stehen.

Das erfindungsgemäße Verfahren zur Steuerung eines erfindungsgemäßen Kraftfahrzeugs gestaltet sich wie folgt. Es versteht sich, dass hier nur einige ausgewählte Verfahrensschritte dargestellt sind, wie sie für das Verständnis des erfindungsgemäßen Verfahrens hilfreich sind. Das Verfahren kann weitere, dem Fachmann bekannte, Schritte bzw. Zwischenschritte umfassen. Es ist weiter vorgesehen, dass das Verfahren in Echtzeit abläuft, insbesondere eine kontinuierliche Auswertung, Berechnung, Übermittlung etc. im Fahrbetrieb erfolgt.

Es werden die Sollwertvorgaben der Sollwerteingabemittel 41, 61 bzw. 71 von dem Sollwertverarbeitungsmittel 8 erfasst, also beispielsweise der Lenkwinkel α des Lenkrades 44, der Betätigungswinkel des Bremspedals 6 und/oder der Betätigungswinkel des Fahrpedals 7.

Hieraus berechnet Sollwertverarbeitungsmittel 8 einen Gierbeschleunigungssollwert GS und Translationsbeschleunigungssollwerte, insbesondere einen Längsbeschleunigungssollwert LS und einen Querbeschleunigungssollwert QS.

Die berechneten Gierbeschleunigungssollwert GS und Translationsbeschleunigungssollwerte, insbesondere einen Längsbeschleunigungssollwert LS und einen Querbeschleunigungssollwert QS, werden an die Fahrzeugbewegungssteuerung 5 übermittelt. Werte zwischen den Komponenten werden grundsätzlich mittels elektrischer Signale übermittelt. Denkbar sind beispielsweise Bussysteme, aber auch andere Übertragungsvarianten.

Die Fahrzeugbewegungssteuerung 5 steuert in einem nächsten Schritt eine Auswahl oder alle zur Verfügung stehenden Aktuatoren 31, 42, 2a-d derart an, dass der Gierbeschleunigungssollwert GS und die Translationsbeschleunigungssollwerte, insbesondere der Längsbeschleunigungssollwert LS und der Querbeschleunigungssollwert QS, erreicht werden oder zumindest näherungsweise erreicht werden.

Vorteilhafterweise erfolgt eine Rückmeldung der entsprechenden Sensoren 51, 52, 53 hinsichtlich des tatsächlichen Gierbeschleunigungswertes TG und der Translationsbeschleunigungswerte, insbesondere der Längsbeschleunigungswert LT und der Querbeschleunigungswert QT. Hierdurch kann vorteilhafterweise eine Nachführung bzw. Überprüfung der Regelung erreicht werden.

In der Fig. 5 ist eine Ausführungsform des erfindungsgemäßen Fahrzeuges bzw. des erfindungsgemäßen Verfahrens schematisch dargestellt.

Im Wesentlichen kann hier auf die zuvor gemachten Ausführungen verwiesen werden.

Das hier dargestellte Fahrzeug F umfasst zudem einen vorderen/hinteren RWA, sowie eine Fahrwerkskinematik FK. Die Fahrwerkskinematik FK umfasst im Wesentlichen eine vordere und/oder hintere Lenkungszahnstange 43, sowie ein Bremse/Antriebssystem BAS. Die Pfeile in der Darstellung symbolisieren jeweils Daten- bzw. Signalflüsse zwischen den jeweiligen Einrichtungen.

Die Lenkungszahnstange 43 ist Teil einer Lenkeinrichtung 4. Entsprechend kann die Zahnstange 43 auf die vorderen Räder 1a, 1b und/oder die hinteren Räder 1c, 1d wirken.

Das Bremse/Antriebssystem BAS kann entsprechend eine oder mehrere Antriebseinrichtungen 3, insbesondere Antriebsmotoren 31, und/oder Bremsen 2a-2d umfassen.

Die Fahrzeugbewegungssteuerung 5 übermittelt einen Zahnstangenkraftsollwert ZFS an den vorderen/hinteren RWA.

Der Vordere/hintere RWA übermittelt ein Motordrehmomentsollwert MTS an die Fahrwerkskinematik FK.

Die Fahrzeugbewegungssteuerung 5 übermittelt eine Raddrehmomentsollwert WTS an das Bremse/Antriebssystem BAS.

Die entsprechenden Sensoren 51, 52, 53 des Fahrzeugs übermittelt eine tatsächlich Gierbeschleunigung GT, tatsächliche Längs-/Querbeschleunigung LT, QT an die Fahrzeugbewegungssteuerung 5.

Fig. 6 zeigt ein Fahrzeug F für ein erfindungsgemäßes Fahrzeug mit einem Bussystem B. Ferner sind dort das Fahrpedal 7 bzw. Bremspedal 6 schematisch dargestellt.

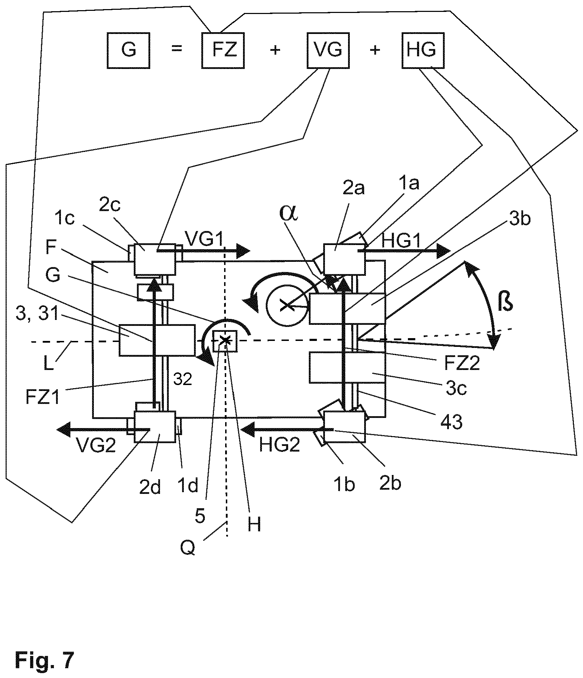

Fig. 7 zeigt eine Ausführungsform eines erfindungsgemäßen Fahrzeugs F. Ferner soll hier ein beispielhafter Zusammenhang bzw. Zuordnung zwischen Fahrzeuggiermoment G, Einfluss der Zahnstangenkraft FZ, Einfluss von Vorderachsengiermoment VG und Hinterachsengiermoment HG verdeutlicht werden.

Das Fahrzeug F umfasst das linke Vorderrad 1a und das rechte Vorderrad 1b, sowie das linke Hinterrad 1c und das rechte Hinterrad 1d.

Das Fahrzeug F umfasst die auf das linke Vorderrad 1a wirkende Bremse 2a, die auf das rechte Vorderrad 1b wirkende Bremse 2b, die auf das linke Hinterrad 1c wirkende Bremse 2c, sowie die auf das rechte Hinterrad 1d wirkende Bremse 2d.

Das Fahrzeug umfasst eine auf die Vorderräder 1a, 1b wirkende Lenkeinrichtung 4 mit mindestens einer Zahnstange 43. Hinsichtlich der weiteren Details der Lenkeinrichtung kann auf die oben gemachten Ausführungen verwiesen werden.

Das Fahrzeug F umfasst eine erste Antriebseinrichtung 3 für die hinteren Räder 1c, 1d, insbesondere umfasst die Antriebseinrichtung 3 einen Antriebsmotor 31 und eine Antriebsachse 32.

Das Fahrzeug F umfasst eine zweite Antriebseinrichtung 3a und eine dritte Antriebseinrichtung 3b für die vorderen Räder 1a, 2a.

Das System bzw. Fahrzeug F ist entsprechend mit einer Fahrzeugbewegungssteuerung 5 bzw. Sollwertverarbeitungsmittel 8 ausgestattet. Ferner sind auch hier die Längsachse L, Querachse Q und Hochachse H bzw. vertikale Achse eingezeichnet. Mit dem Bezugszeichen G ist auch hier der Pfeil bezeichnet, welches das Giermoment des Fahrzeuges symbolisieren soll. Hinsichtlich des Lenkwinkels α und des Fahrzeugwinkels β kann auf die oben gemachten Ausführungen verwiesen werden.

In der hier dargestellten beispielhaften Ausführungsform des Fahrzeugs soll ein Anschluss an Brems-/Fahraktuatoren - Alternative Lenkfunktionen gezeigt werden, der sich insbesondere durch eine
- Radmomentregelung
- 4-Rad-Bremsen
- Test der Fahrzeugkonfiguration basierend auf dem Antriebsmoment auf Radebene
- Bremse / Antriebseingang erzeugt Zahnstangenkraft (Federungsvorteil)
- Zahnstangenkraft ist ein kombinierter Effekt von Lenkfunktion und alternativer Lenkfunktion auszeichnen soll.

Es ist ferner für das erfindungsgemäße System insbesondere vorgesehen, dass sich das Giermoment G aus der Summe des Einflusses der Zahnstangenkraft FZ, des Einflusses des Vorderachsengiermomentes VG und des Hinterachsengiermomentes HG ergibt.

Hierbei soll der Einfluss der Zahnstangenkraft FZ durch einen Pfeil FZ1 zwischen dem rechten Hinterrad 1d und dem linken Hinterrad 1c, sowie durch einen Pfeil FZ2 von dem rechten Vorderrad 1b zu dem linken Vorderrad 1a, angedeutet werden. Die Pfeile FZ1, FZ2 sind in Querrichtung und in gleicher Richtung ausgerichtet.

Der Einfluss von einem Vorderachsengiermoment VG soll durch einen Pfeil VG1 von dem linken Hinterrad 1c und einen Pfeil VG2 von dem rechten Hinterrad 1d angedeutet werden. Die Pfeile VG1, VG2 sind in Längsrichtung L, jedoch in entgegengesetzter Richtung ausgerichtet.

Der Einfluss von einem Hinterachsengiermoment soll durch einen Pfeil HG1 von dem linken Vorderrad 1a und einen Pfeil HG2 von dem rechten Vorderrad 1b angedeutet werden. Die Pfeile HG1, HG2 sind in Längsrichtung L, jedoch in entgegengesetzter Richtung ausgerichtet.

Die vorgeschlagene Erfindung eignet sich besonders vorteilhaft für Fahrzeuge mit By-Wire-Systemen und/oder autonomen Funktionen. Insbesondere wird hier ein zentrales elektronisches Steuergerät, insbesondere Fahrzeugbewegungssteuerung 5 bzw. Sollwertverarbeitungsmittel 8, das für die Fahrzeugbewegungssteuerung verantwortlich ist, beschrieben, welches die an Bord integrierten Aktuatoren ansteuert, die die Fahrzeugbewegung beeinflussen. Als Aktuatoren kommen beispielsweise die Antriebseinrichtung, insbesondere Antriebsmotor, Bremsen, Lenkeinrichtung, insbesondere Lenkantrieb bzw. Lenkzahnstange, in Frage. Auch ein aktives Fahrwerk kommt als Aktuator in Frage. Eine dynamisch skalierbare und anpassbare Anforderung für jeden Aktuator ist vorteilhaft, um die kombinierte Wirkung der Aktuatoren in Bezug auf die Fahrzeugsteuerbarkeit und die Redundanz der Aktuatoren zu nutzen.

Bei dem Antriebsmotor 31 kann es sich sowohl um einen Elektromotor, als auch einen Verbrennungsmotor handeln.

Statt des Lenkrades kommt auch ein Joystick, Fahrpedale, Augenbewegungserfassungsmittel in Frage.

Das System kann für die Vorderachse und/oder die Hinterachse eingesetzt werden.

Die von der Sollwertverarbeitungsmittel übermittelten Sollwerte werden insbesondere in einer Wunschtrajektorie abgebildet, insbesondere vorgesehene Sollgiermoment-, Sollnickmoment-, Sollwankmoment-und/oder Sollbeschleunigungswerte.

## Patentansprüche

1. Fahrzeug (F), insbesondere Kraftfahrzeug, umfassend
- Aktuatoren, insbesondere mindestens eine Antriebseinrichtung (3) mit einem Antriebsmotor (31), der auf mindestens ein Antriebsrad (1a-d) wirken kann, eine Bremseinrichtung mit mindestens einer Bremse (2a-d), die auf mindestens ein Rad (1a-d) wirken kann, und/oder eine Lenkeinrichtung (4) mit mindestens einem Lenksensor (42), mit welcher der Radwinkel (α) mindestens eines Rades (1a-d) verstellt werden kann,
- eine Fahrzeugbewegungssteuerung (5), sowie
- mindestens ein Sollwerteingabemittel (8) zur Eingabe von Sollwertvorgaben (S 41, S61, S71, SAD),
**dadurch gekennzeichnet, dass**
- das Fahrzeug (F) mit einem Sollwertverarbeitungsmittel (8) ausgestattet ist, wobei das Sollwertverarbeitungsmittel (8) dazu eingerichtet ist,
- Sollwertvorgaben (S 41, S61, S71, SAD) der Sollwerteingabemittel (41, 61, 71, AD) zu erfassen,
- aus den Sollwertvorgaben einen Gierbeschleunigungssollwert (GS) und Translationsbeschleunigungssollwerte, insbesondere einen Längsbeschleunigungssollwert (LS) und einen Querbeschleunigungssollwert (QS), zu berechnen,
- das Sollwertverarbeitungsmittel (8) dazu eingerichtet ist, die berechneten Gierbeschleunigungssollwert (GS) und Translationsbeschleunigungssollwerte, insbesondere einen Längsbeschleunigungssollwert (LS) und einen Querbeschleunigungssollwert (QS), an die Fahrzeugbewegungssteuerung (5) zu übermitteln, wobei
- die Fahrzeugbewegungssteuerung (5) dazu eingerichtet ist eine Auswahl oder alle zur Verfügung stehenden Aktuatoren derart anzusteuern, dass der Gierbeschleunigungssollwert (GS) und die Translationsbeschleunigungssollwerte, insbesondere der Längsbeschleunigungssollwert (LS) und der Querbeschleunigungssollwert (QS), erreicht werden oder zumindest näherungsweise erreicht werden.

2. Fahrzeug nach Anspruch 1, **dadurch gekennzeichnet, dass** das Fahrzeug mit einem Gierbeschleunigungssensor (51) zur Erfassung der tatsächlichen Gierbeschleunigung (GT), einem Längsbeschleunigungssensor (52) zur Erfassung der tatsächlichen Längsbeschleunigung (LT), und/oder Querbeschleunigungssensor (53) zur Erfassung der tatsächlichen Querbeschleunigung (QT) ausgestattet ist, die in einer zur Signalübertragung geeigneten Verbindung mit der Fahrzeugbewegungssteuerung (5) stehen.

3. Fahrzeug nach mindestens einem der vorhergehenden Ansprüche, **dadurch gekennzeichnet, dass** es sich bei dem Sollwerteingabemittel um einen Lenkwinkelsensor (42), einen Bremspedalsensor (61), einen Fahrpedalsensor (71), autonome Fahrsysteme (AD) und/oder ein Augenbewegungserfassungssystem handelt.

4. Fahrzeug nach mindestens einem der vorhergehenden Ansprüche, **dadurch gekennzeichnet, dass** die Fahrzeugbewegungssteuerung (5) dazu eingerichtet ist, die jeweiligen Aktuatoren mittels Lenkantriebssollwert (S42), Antriebsmotorsollwert (S31) und/oder Bremsensollwert (S2) anzusteuern.

5. Fahrzeug nach mindestens einem der vorhergehenden Ansprüche, **dadurch gekennzeichnet, dass**
- das Fahrzeug eine vordere und/oder hintere RWA (RWA), sowie eine Fahrwerkskinematik (FK) umfasst, wobei
- die Fahrwerkskinematik (FK) eine vordere und/oder hintere Lenkungszahnstange (VHL), sowie ein Bremse/Antriebssystem (BAS) umfasst, wobei
- die Fahrzeugbewegungssteuerung (5) dazu eingerichtet ist, einen Zahnstangenkraftsollwert (ZFS) an den vorderen und/oder hinteren RWA (RWA) zu übermitteln,
- der vordere und/oder hintere RWA (RWA) dazu eingerichtet ist, einen Motordrehmomentsollwert (MTS) an die Fahrwerkskinematik (FK) zu übermitteln,
- die Fahrzeugbewegungssteuerung (5) dazu eingerichtet ist, einen Raddrehmomentsollwert (WTS) an das Bremse/Antriebssystem (BAS) zu übermitteln.

6. Fahrzeug nach mindestens einem der vorhergehenden Ansprüche, **dadurch gekennzeichnet, dass** das Fahrzeug, insbesondere die Fahrzeugbewegungssteuerung (5) derart eingerichtet ist, dass
- sich eine Gierbeschleunigung (G) aus einem Zahnstangeneinfluss (FZ), insbesondere Zahnstange einer vorderen und/oder hinteren Lenkungseinrichtung, und einem Achsgiermomenteinfluss (VG, HG), insbesondere einer vorderen und/oder hinteren Antriebseinrichtung, zusammensetzen kann, wobei insbesondere
- jede Zahnstange, insbesondere Lenkungszahnstange (43), direkt durch einen Drehmoment-Sollwert einer Antriebseinrichtung (3, 3a, 3b), gesteuert werden kann, insbesondere durch eine direkt angeforderte Zahnstangenkraft (FZ), wobei insbesondere
- jede Zahnstange (43) indirekt durch einen Drehmoment-Sollwert einer Bremse (2a-d) und einer Antriebseinrichtung (3-3b), insbesondere abhängig vom Torque-Steer-Effekt der Aufhängung, gesteuert werden kann, wobei insbesondere
- das Giermoment jeder Achse (VG, HG), insbesondere der vorderen und/oder hinteren Achse, direkt durch einen Drehmoment-Sollwert einer Bremse (2a-d) und einer Antriebseinrichtung (3-3b) gesteuert werden kann.

7. Fahrzeug nach mindestens einem der vorhergehenden Ansprüche, **dadurch gekennzeichnet, dass** die Fahrzeugbewegungssteuerung (5), dazu eingerichtet ist, bei einem gegebenem Gierbeschleunigungssollwert, aus Fahrzeugträgheitsparametern einen Giermomentsollwert (GS) zu berechnen.

8. Fahrzeug nach mindestens einem der vorhergehenden Ansprüche, **dadurch gekennzeichnet, dass** die Fahrzeugbewegungssteuerung, dazu eingerichtet ist, dass in Kenntnis der verfügbaren Aktuatoren (42, 31, 2a-d), ihrer Leistung und ihrer Auswirkung auf die Zahnstangenkraft (FZ) und das Giermoment (G), für die jeweiligen Umgebungs- und Fahrzeugbedingungen, insbesondere Reibung der Straßenreifen, Radius der Aufhängung, eine Übertragungsfunktion für jede Drehmomentanforderung der Aktuatoren implementiert werden kann.

9. Fahrzeug nach mindestens einem der vorhergehenden Ansprüche, **dadurch gekennzeichnet, dass** die Fahrzeugbewegungssteuerung (5) in Verbindung mit dem Sollwertverarbeitungsmittel (8) als Multiple-Input-Multiple-Output-Controller ausgestaltet ist, der dazu eingerichtet ist, eine Übertragungsfunktion als Feedforward-Verstärkung zu verwenden, um die Aktuatoren zu steuern.

10. Fahrzeug nach mindestens einem der vorhergehenden Ansprüche, **dadurch gekennzeichnet, dass** die Fahrzeugbewegungssteuerung (5) zur Messung der Fahrzeugbewegung und der Aktuatorsättigung eingerichtet ist, wobei die Fahrzeugbewegungssteuerung (5) dazu eingerichtet ist, eine Rückkopplungsinformation zu geben, um eine Referenznachführung zu realisieren.

11. Verfahren zur Steuerung des Fahrzeuges gemäß mindestens einem der vorhergehenden Ansprüche, **gekennzeichnet durch** folgende Verfahrensmerkmale:
- Erfassen von Sollwertvorgaben (S41, S61, S71, AD) der Sollwerteingabemittel (41, 61 bzw. 71) durch das Sollwertverarbeitungsmittel (8), insbesondere der Lenkwinkel (α) des Lenkrades (44), der Betätigungswinkel des Bremspedals (6) und/oder der Betätigungswinkel des Fahrpedals (7);
- Berechnen eines Gierbeschleunigungssollwertes (GS) und Translationsbeschleunigungssollwerte, insbesondere eines Längsbeschleunigungssollwertes (LS) und einen Querbeschleunigungssollwertes (QS)
- Übermittlung der berechneten Werte von dem Sollwertverarbeitungsmittel (8) an die Fahrzeugbewegungssteuerung (5);
- Ansteuerung einer Auswahl oder aller zur Verfügung stehenden Aktuatoren (31, 42, 2a-d) durch die Fahrzeugbewegungssteuerung (5) derart, dass der Gierbeschleunigungssollwert (GS) und die Translationsbeschleunigungssollwerte, insbesondere der Längsbeschleunigungssollwert (LS) und der Querbeschleunigungssollwert (QS), erreicht werden oder zumindest näherungsweise erreicht werden.

12. Verfahren nach Anspruch 12, **dadurch gekennzeichnet, dass** der Gierbeschleunigungssensor (51) eine tatsächliche Gierbeschleunigung (GT), der Längsbeschleunigungssensor (52) eine tatsächliche Längsbeschleunigung (LT), und/oder der Querbeschleunigungssensor (53) eine tatsächliche Querbeschleunigung (QT) an die Fahrzeugbewegungssteuerung (5) rückmeldet.

13. Verfahren nach mindestens einem der vorhergehenden Ansprüche, **dadurch gekennzeichnet, dass**
- die Fahrzeugbewegungssteuerung (5) einen Zahnstangenkraftsollwert (ZFS) an den vordere/hintere RWA (RWA) übermittelt,
- der vordere/hintere RWA (RWA) ein Motordrehmomentsollwert (MTS) an die Fahrwerkskinematik (FK) übermittelt,
- die Fahrzeugbewegungssteuerung (5) eine Raddrehmomentsollwert (WTS) an das Bremse/Antriebssystem (BAS) übermittelt.

14. Verfahren nach mindestens einem der vorhergehenden Ansprüche, **dadurch gekennzeichnet, dass**
- Sollwerteingaben (S41, S61, S71, SAD) vom Fahrer oder von einem automatisierten Fahralgorithmus in Gierbeschleunigungssollwerte (GS), insbesondere über die vertikale Achse, und Translationsbeschleunigungssollwerte (LS, QS), insbesondere longitudinal und lateral, übersetzt werden, und/oder
- eine Gierbeschleunigung (G) aus einem Zahnstangeneinfluss (FZ), insbesondere Zahnstange (43) einer vorderen und/oder hinteren Lenkungseinrichtung (4), und einem Achsgiermomenteinfluss (VG, HG) insbesondere einer vorderen und/oder hinteren Antriebseinrichtung (3-3b), zusammengesetzt wird, wobei insbesondere
- jede Zahnstange (43), insbesondere Lenkungszahnstange, direkt durch einen Drehmoment-Sollwert der Antriebseinrichtung (3-3b) gesteuert wird, insbesondere durch eine direkt angeforderte Zahnstangenkraft (FZ), wobei insbesondere
- jede Zahnstange (43) indirekt durch einen Drehmoment-Sollwert einer Bremse (2a-d) und einer Antriebseinrichtung (3-3b), insbesondere abhängig vom Torque-Steer-Effekt der Aufhängung, gesteuert wird, wobei insbesondere
- das Giermoment (VG, HG) jeder Achse direkt durch den Drehmoment-Sollwert der Bremse (2a-d) und der Antriebseinrichtung (3-3b) gesteuert wird.

15. Verfahren nach mindestens einem der vorhergehenden Ansprüche, **dadurch gekennzeichnet, dass** bei einem gegebenem Gierbeschleunigungssollwert, aus den Fahrzeugträgheitsparametern ein Giermomentsollwert (GS) berechnet wird und/oder dass in Kenntnis der verfügbaren Aktuatoren, ihrer Leistung und ihrer Auswirkung auf die Zahnstangenkraft (FZ) und das Giermoment (G), für die jeweiligen Umgebungs- und Fahrzeugbedingungen, insbesondere Reibung der Straßenreifen, Radius der Aufhängung, eine Übertragungsfunktion für jede Drehmomentanforderung der Aktuatoren implementiert wird und/oder dass die Fahrzeugbewegungssteuerung (5) und das Sollwertverarbeitungsmittel (8) als Multiple-Input-Multiple-Output-Controller ausgestaltet ist, wobei eine Übertragungsfunktion als Feedforward-Verstärkung zu verwendet wird, um die Aktuatoren zu steuern und/oder dass die Fahrzeugbewegungssteuerung (5) die Fahrzeugbewegung und die Aktuatorsättigung misst, wobei die Fahrzeugbewegungssteuerung (5) eine Rückkopplungsinformation gibt, um eine Referenznachführung zu realisieren.
